# EUROPÄISCHE PATENTSCHRIFT

(11) **EP 3 630 584 B1**
(45) Veröffentlichungstag und Bekanntmachung des Hinweises auf die Patenterteilung: **23.06.2021**
(21) Anmeldenummer: 18728836.0
(22) Anmeldetag: 28.05.2018
(51) Int. Cl.: B62D 15/02, B60W 30/06

(54) **VERFAHREN ZUM BETREIBEN EINER ULTRASCHALLSENSORVORRICHTUNG FÜR EIN KRAFTFAHRZEUG ZUM ÜBERWACHEN EINES BODENBEREICHS UNTERHALB DES KRAFTFAHRZEUGS, ULTRASCHALLSENSORVORRICHTUNG, FAHRERASSISTENZSYSTEM SOWIE KRAFTFAHRZEUG**
METHOD FOR OPERATING AN ULTRASONIC DEVICE FOR MOTOR VEHICLE TO MONITORING A GROUND AREA UNDER THE VEHICLE, ULTRANSONIC DEVICE, DRIVER ASSISTANT SYSTEM AND VEHICLE
PROCÉDÉ POUR OPERER UN DISPOSITIF ULTRASONIC POUR VOITURE POUR SURVEILLER UNE PARTIE DE LA CHAUSSÉE SOUS LA VOITURE, DISPOSITF ULTRASONIC, SYSTÈME D'ASSISTANCE À LA CONDUITE ET VOITURE

(30) Priorität: 31.05.2017 DE 102017111932
(43) Veröffentlichungstag der Anmeldung: 08.04.2020
(73) Patentinhaber: Valeo Schalter und Sensoren GmbH, 74321 Bietigheim-Bissingen (DE)
(72) Erfinder: CAUTILLO, Luca, 74321 Bietigheim-Bissingen (DE); SCHREPFER, Joerg, 74321 Bietigheim-Bissingen (DE); SIMCHEN, Marvin, 74321 Bietigheim-Bissingen (DE)
(74) Vertreter: Enge, Sebastian
(86) Internationale Anmeldenummer: PCT/EP2018/063892
(87) Internationale Veröffentlichungsnummer: WO 2018/219849

(56) Entgegenhaltungen:
- DE-A1-102013 207 823
- DE-A1-102014 202 497
- DE-A1-102015 106 403
- US-A- 5 521 594

## Beschreibung

Die vorliegende Erfindung betrifft ein Verfahren zum Betreiben einer Ultraschallsensorvorrichtung für ein Kraftfahrzeug, bei welchem ein Ultraschallsignal in einen Bodenbereich unterhalb des Kraftfahrzeugs ausgesendet wird und ein Ultraschallsignal aus dem Bodenbereich empfangen wird, und mittels eines Steuergeräts anhand des ausgesendeten und/oder des empfangen Ultraschallsignals ein Objekt in dem Bodenbereich erkannt wird. Darüber hinaus betrifft die vorliegende Erfindung eine Ultraschallsensorvorrichtung für ein Kraftfahrzeug. Ferner betrifft die vorliegende Erfindung ein Fahrerassistenzsystem mit einer solchen Ultraschallsensorvorrichtung. Schließlich betrifft die vorliegende Erfindung ein Kraftfahrzeug.

Das Interesse richtet sich vorliegend auf Ultraschallsensorvorrichtungen für Kraftfahrzeuge. Aus dem Stand der Technik sind Ultraschallsensorvorrichtungen bekannt, welche eine Mehrzahl von Ultraschallsensoren aufweisen. Mit solchen Ultraschallsensoren kann ein Umgebungsbereich des Kraftfahrzeugs überwacht werden. Insbesondere kann mithilfe der Ultraschallsensoren ein jeweiliger Abstand zwischen dem Kraftfahrzeug und den Objekten in dem Umgebungsbereich bestimmt werden. Eine solche Ultraschallsensorvorrichtung kann beispielsweise Teil eines Fahrerassistenzsystems sein, welches den Fahrer beim Einparken in eine Parklücke und/oder beim Ausparken aus einer Parklücke unterstützt.

Darüber hinaus sind aus dem Stand der Technik Ultraschallsensorvorrichtungen bekannt, mit denen ein Bodenbereich unterhalb des Kraftfahrzeugs überwacht werden kann. Hierzu beschreibt die DE 10 2013 001 119 A1 ein Fahrerassistenzsystem zum Assistieren eines Fahrers beim Ein- und/oder Ausparken eines Fahrzeugs, wobei das Fahrerassistenzsystem wenigstens eine Sensor-Einrichtung zum Erfassen eines Umgebungsbereichs des Kraftfahrzeugs und ein Steuergerät zum Auswerten der Signale der Sensor-Einrichtung aufweist. Anhand der Signale kann beispielsweise ein Abstand zwischen dem Boden und einer Unterseite des Fahrzeugs ermittelt werden. Dabei sind die Sensor-Einrichtung und das Steuergerät derart eingerichtet, dass der Erfassungsbereich der Sensor-Einrichtung wenigstens einen vorgebbaren Bodenbereich unterhalb des Kraftfahrzeugs umfasst. Die Sensor-Einrichtung kann zumindest einen Ultraschallsensor umfassen. DE 10 2013 207823 A1 beschreibt eine gattungsgemässe Ultraschallsensorvorrichtung.

Es ist Aufgabe der vorliegenden Erfindung, eine Lösung aufzuzeigen, wie mit einer Ultraschallsensorvorrichtung der eingangs genannten Art ein Bodenbereich unterhalb des Kraftfahrzeugs zuverlässiger überwacht werden kann.

Diese Aufgabe wird erfindungsgemäß durch ein Verfahren, durch eine Ultraschallsensorvorrichtung, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum Betreiben einer Ultraschallsensorvorrichtung für ein Kraftfahrzeug wird bevorzugt ein Ultraschallsignal in einem Bodenbereich unterhalb des Kraftfahrzeugs ausgesendet und ein Ultraschallsignal aus dem Bodenbereich empfangen. Darüber hinaus wird bevorzugt mittels eines Steuergeräts anhand des ausgesendeten und/oder des empfangen Ultraschallsignals ein Objekt in dem Bodenbereich erkannt. Zudem ist es bevorzugt vorgesehen, dass mit einem ersten Ultraschallsensor der Ultraschallsensorvorrichtung das Ultraschallsignal ausgesendet wird und das von dem ersten Ultraschallsensor ausgesendete und an einer Fahrbahnoberfläche in dem Bodenbereich reflektierte Ultraschallsignal insbesondere mit einem zweiten Ultraschallsensor der Ultraschallsensorvorrichtung empfangen wird. Darüber hinaus wird mittels des Steuergeräts bevorzugt anhand eines Anteils des von dem zweiten Ultraschallsensor empfangenen Ultraschallsignals das Objekt erkannt.

Ein erfindungsgemäßes Verfahren dient zum Betreiben einer Ultraschallsensorvorrichtung für ein Kraftfahrzeug. Hierbei wird ein Ultraschallsignal in einen Bodenbereich unterhalb des Kraftfahrzeugs ausgesendet und ein Ultraschallsignal aus dem Bodenbereich empfangen. Zudem wird mittels eines Steuergeräts anhand des ausgesendeten und/oder des empfangen Ultraschallsignals ein Objekt in dem Bodenbereich erkannt. Dabei wird das Ultraschallsignal mit einem ersten Ultraschallsensor der Ultraschallsensorvorrichtung ausgesendet und das von dem ersten Ultraschallsensor ausgesendete und an einer Fahrbahnoberfläche in dem Bodenbereich reflektierte Ultraschallsignal mit einem zweiten Ultraschallsensor der Ultraschallsensorvorrichtung empfangen. Mittels des Steuergeräts wird anhand des Anteils des von dem zweiten Ultraschallsensor empfangenen Ultraschallsignals das Objekt erkannt.

Mithilfe des Verfahrens wird der Bodenbereich unterhalb des Kraftfahrzeugs überwacht. Dieser Bodenbereich erstreckt sich von der Fahrbahnoberfläche, auf welcher sich das Kraftfahrzeug aktuell befindet, bis zu einem Unterboden des Kraftfahrzeugs. Somit kann beispielsweise vor einer Fahrt mit dem Kraftfahrzeug überprüft werden, ob sich ein Objekt in dem Bodenbereich befindet. Das Verfahren kann mit einer Ultraschallsensorvorrichtung durchgeführt werden. Diese Ultraschallsensorvorrichtung umfasst zumindest zwei Ultraschallsensoren. Die Ultraschallsensorvorrichtung umfasst zumindest einen ersten Ultraschallsensor zum Aussenden des Ultraschallsignals und zumindest einen zweiten Ultraschallsensor zum Empfangen des Ultraschallsignals. Bevorzugt ist es vorgesehen, dass die Ultraschallsensorvorrichtung eine Mehrzahl von Ultraschallsensoren aufweist. Die Ultraschallsensoren können so ausgebildet sein, dass diese ein Ultraschallsignal aussenden können. Ferner können die Ultraschallsensoren so ausgebildet sein, dass diese ein Ultraschallsignal empfangen können. Bevorzugt ist es aber vorgesehen, dass mit den jeweiligen Ultraschallsensoren sowohl ein Ultraschallsignal ausgesendet werden kann als auch ein Ultraschallsignal empfangen werden kann. Die Ultraschallsensoren können eine Membran aufweisen, die mit einem Wandlerelement, insbesondere einem piezoelektrischen Element, zu mechanischen Schwingungen angeregt werden kann. Hierdurch kann das Ultraschallsignal ausgesendet werden. Zum Empfangen des Ultraschallsignals kann die Schwingung der Membran, die durch das empfangene Ultraschallsignal bewirkt wird, mit dem Wandlerelement erfasst werden und in Form eines Sensorsignals ausgegeben werden. Dieses Sensorsignal kann dann mittels eines Steuergeräts der Ultraschallsensorvorrichtung zum Erkennen des Objekts ausgewertet werden.

Gemäß einem wesentlichen Aspekt der vorliegenden Erfindung ist es nun vorgesehen, dass das Ultraschallsignal mit dem ersten Ultraschallsensor ausgesendet wird. Dieser erste Ultraschallsensor wird als Sender betrieben und sendet das Ultraschallsignal aus. Dabei wird das Ultraschallsignal mit dem ersten der Ultraschallsensoren in Richtung der Fahrbahnoberfläche in den Bodenbereich ausgesendet. Dieses Ultraschallsignal wird dann an der Fahrbahnoberfläche und/oder an dem Unterboden des Kraftfahrzeugs reflektiert und kann mit einem anderen beziehungsweise dem zweiten Ultraschallsensor empfangen werden. Dies bedeutet, dass der zweite Ultraschallsensor als Empfänger zum Empfangen des Ultraschallsignals betrieben wird. Es können aber auch mehrere erste Ultraschallsensoren zum jeweiligen Senden des Ultraschallsignals und/oder mehrere zweite Ultraschallsensoren zum jeweiligen Empfangen des Ultraschallsignals vorgesehen sein. Gemäß der vorliegenden Erfindung ist es nicht vorgesehen, dass ein Abstand zwischen dem Ultraschallsensor und der Fahrbahnoberfläche bestimmt wird. Das Ultraschallsignal wird mit dem ersten Ultraschallsensor ausgesendet und von dem zweiten Ultraschallsensor empfangen, wobei sich der zweite Ultraschallsensor an einer anderen Position befindet als der erste Ultraschallsensor. Es wird nun überprüft, welcher Anteil des ausgesendeten Ultraschallsignals mit dem zweiten Ultraschallsensor empfangen werden kann. Es wird also gemessen, ob und wie viel von dem Ultraschallsignal, das mit dem ersten Ultraschallsensor ausgesendet wurde, von dem zweiten Ultraschallsensor empfangen wird. Falls sich das Objekt in dem Bodenbereich zwischen dem ersten Ultraschallsensor und dem zweiten Ultraschallsensor befindet, wird das ausgesendete Ultraschallsignal zumindest teilweise von diesem Objekt reflektiert. Dies führt dazu, dass nur ein geringer Anteil oder gar kein Anteil des ausgesendeten Ultraschallsignals von dem zweiten Ultraschallsensor empfangen wird. Somit kann auf einfache und zuverlässige Weise überprüft werden, ob sich ein Objekt in dem Bodenbereich befindet.

Bevorzugt kann das Verfahren mit einer Mehrzahl von Ultraschallsensoren durchgeführt werden. Da die Ultraschallsensoren bevorzugt das Ultraschallsignal sowohl aussenden als auch empfangen können, können die Ultraschallsensoren entweder als erster Ultraschallsensor oder als zweiter Ultraschallsensor betrieben werden. Dabei können die ersten Ultraschallsensoren zum Aussenden des jeweiligen Ultraschallsignals zeitgleich oder zeitlich nacheinander angesteuert werden.

Bevorzugt wird das Objekt anhand des Anteils des von dem zweiten Ultraschallsensor empfangenen Ultraschallsignals während eines Stillstands des Kraftfahrzeugs erkannt. Sobald das Kraftfahrzeug abgestellt beziehungsweise geparkt wurde, kann mit dem ersten Ultraschallsensor das Ultraschallsignal ausgesendet werden und das Ultraschallsignal, das an der Fahrbahnoberfläche reflektiert wurde von dem zweiten Ultraschallsensor empfangen werden. Damit kann insbesondere vor einem Fahrtantritt mit dem Kraftfahrzeug überprüft werden, ob sich ein Objekt in dem Bodenbereich befindet. Somit kann beispielsweise eine Beschädigung des Kraftfahrzeugs verhindert werden. Falls es sich bei dem Objekt um ein Lebewesen, beispielsweise ein Tier, handelt, kann eine Verletzung des Lebewesens verhindert werden.

Weiterhin ist es vorteilhaft, wenn der Anteil des von dem zweiten Ultraschallsensor empfangenen Ultraschallsignals nach einem Abstellen des Kraftfahrzeugs gespeichert wird und der Anteil des von dem zweiten Ultraschallsensor empfangenen Ultraschallsignals zu einem späteren Zeitpunkt nochmals bestimmt wird und mit dem gespeicherten Anteil verglichen wird. Wenn das Kraftfahrzeug in Richtung eines Stellplatzes, auf welchem es abgestellt wird, manövriert wird, kann davon ausgegangen werden, dass sich auf dem Stellplatz keine Objekte befinden, da diese ansonsten von dem Fahrer und/oder den Umfeldsensoren erkannt worden wären. Wenn nun unmittelbar nach dem Abstellen des Kraftfahrzeugs der Anteil des von dem zweiten Ultraschallsensor empfangenen Ultraschallsignals bestimmt wird, kann dieser Anteil als Referenz für den Zustand verwendet werden, dass sich kein Objekt in dem Bodenbereich befindet. Zu einem späteren Zeitpunkt kann dann nochmals der Anteil des Ultraschallsignals bestimmt werden, der von dem zweiten Ultraschallsensor empfangen wird. Dieser kann dann mit dem gespeicherten Anteil verglichen werden. Somit kann auf einfache Weise anhand des Vergleichs erkannt werden, ob sich ein Objekt in dem Bodenbereich befindet oder nicht. Dabei ist es insbesondere vorgesehen, dass der Anteil des von dem zweiten Ultraschallsensor empfangenen Ultraschallsignals vor dem Fahrtantritt mit dem Kraftfahrzeug bestimmt wird. Es kann auch vorgesehen sein, dass der Anteil periodisch bestimmt wird und mit dem gespeicherten Anteil verglichen wird, solange das Kraftfahrzeug abgestellt ist.

Gemäß einer weiteren Ausführungsform wird eine Intensität des von dem zweiten Ultraschallsensor empfangenen Ultraschallsignals nach dem Abstellen des Kraftfahrzeugs bestimmt und zum Erkennen des Objekts wird die Intensität mit einer vorbestimmten Referenzintensität verglichen. Vor der Inbetriebnahme der Ultraschallsensorvorrichtung können mehrere Referenzmessungen durchgeführt werden. Somit können Referenzintensitäten bestimmt werden, welche die Intensität des Ultraschallsignals, welches mit dem zweiten Ultraschallsensor empfangen wird, beschreibt, falls sich kein Objekt in dem Bodenbereich befindet. Hierzu können Referenzmessungen für unterschiedliche Fahrbahnoberflächen, beispielsweise asphaltierte Straßen, Schotterwege und/oder Grasflächen, durchgeführt werden. Wie bereits erläutert, kann die Ultraschallsensorvorrichtung mehrere Ultraschallsensoren aufweisen. Dabei können unterschiedliche Messungen durchgeführt werden, bei denen zumindest einer der Ultraschallsensoren als erster Ultraschallsensor betrieben wird und zumindest einer der Ultraschallsensoren als zweiter Ultraschallsensor betrieben wird. Zu einem späteren Zeitpunkt können andere der Ultraschallsensoren als erster und/oder zweiter Ultraschallsensor betrieben werden. Diese Varianten können unterschiedliche Referenzmessungen durchgeführt werden. Anhand dieser Referenzmessungen beziehungsweise der gespeicherten Referenzintensitäten kann beispielsweise eine digitale Karte bereitgestellt werden, welche für die einzelnen Ultraschallsensoren die Intensität des empfangenen Ultraschallsignals für den Fall, dass sich kein Objekt in dem Bodenbereich befindet, beschreibt. Es können auch Referenzintensitäten gespeichert sein, welche vorbestimmte Objekte in dem Bodenbereich beschreiben. Diese ermöglicht eine zuverlässige Überwachung des Bodenbereichs.

Gemäß einer weiteren Ausführungsform kann es vorgesehen sein, dass zudem Umwelteinflüsse bei der Überwachung des Bodenbereichs berücksichtigt werden. Es kann beispielsweise der Fall sein, dass sich auf der Fahrbahnoberfläche in dem Bodenbereich Schnee und/oder Eis befindet. Durch diese Schneeschicht und/oder Eisschicht auf der Fahrbahnoberfläche ergeben sich veränderte Reflexionseigenschaften des Ultraschallsignals. In Abhängigkeit von der Umgebungstemperatur und/oder der Erwärmung des Schnees und/oder des Eises durch die Wärme des Kraftfahrzeugs können diese schmelzen, wodurch sich die Reflexionseigenschaften im Laufe der Zeit ändern können. Dies kann bei den Messungen berücksichtigt werden. Dies gilt insbesondere für Fälle, bei denen das Kraftfahrzeug für eine verhältnismäßig lange Dauer abgestellt wird. Hier kann es auch der Fall sein, dass das Kraftfahrzeug auf einer Rasenfläche abgestellt wird, welches sich im Laufe der Zeit verändert und somit die Reflexionseigenschaften verändert. Unter Berücksichtigung dieser Umgebungsparameter kann Bodenbereich auf zuverlässige Weise überwacht werden.

Gemäß einer weiteren Ausführungsform werden die Ultraschallsensoren beziehungsweise der erste Ultraschallsensor und der zweite Ultraschallsensor zu vorbestimmten Zeitpunkten zum Reinigen der jeweiligen Membranen der Ultraschallsensoren angesteuert. Wie bereits erläutert, können die Ultraschallsensoren Membranen aufweisen. An diesen Membranen können sich im Betrieb des Kraftfahrzeugs Verschmutzungen ablagern. Es kann auch der Fall sein, dass sich Eis und/oder Schnee an der Membran ablagert. Dies ist insbesondere dadurch begründet, dass die Ultraschallsensoren im Bereich des Unterbodens des Kraftfahrzeugs angeordnet sind. Die Ultraschallsensoren können zu vorbestimmten Zeitpunkten so angesteuert werden, dass die Membran in mechanische Schwingungen beziehungsweise starke Eigenvibrationen versetzt wird. Somit kann erreicht werden, dass sich Ablagerungen und/oder Verschmutzungen auf der Membran lösen. Dies ermöglicht einen zuverlässigen Betrieb der Ultraschallsensorvorrichtung.

Eine erfindungsgemäße Ultraschallsensorvorrichtung für ein Kraftfahrzeug umfasst zumindest einen ersten Ultraschallsensor, zumindest einen zweiten Ultraschallsensor und ein Steuergerät. Die Ultraschallsensorvorrichtung ist zum Durchführen eines erfindungsgemäßen Verfahrens und der vorteilhaften Ausgestaltungen davon ausgelegt. Dabei ist es insbesondere vorgesehen, dass die Ultraschallsensorvorrichtung zumindest zwei erste Ultraschallsensoren und/oder zumindest zwei zweite Ultraschallsensoren aufweist. Die Ultraschallsensorvorrichtung kann also zumindest vier Ultraschallsensoren aufweisen. Insbesondere weist die Ultraschallsensorvorrichtung zumindest zehn Ultraschallsensoren auf. Diese Ultraschallsensoren können dann verteilt im Bereich des Unterbodens des Kraftfahrzeugs angeordnet werden und somit der Bodenbereich auf zuverlässige Weise überwacht werden. Dabei kann eine erste Gruppe der Ultraschallsensoren als erste Ultraschallsensoren, also als Sender, betrieben werden und eine zweite Gruppe der Ultraschallsensoren kann als zweite Ultraschallsensoren, also als Empfänger, betrieben werden. Es kann auch der Fall sein, dass in aufeinanderfolgenden Messzyklen der Ultraschallsensorvorrichtung ein Wechsel erfolgt, welche der Ultraschallsensoren als erste oder als zweite Ultraschallsensoren betrieben werden.

In einer Ausführungsform weist die Ultraschallsensorvorrichtung zumindest einen Umfeld-Ultraschallsensor zum Erfassen eines Umgebungsbereichs des Kraftfahrzeugs auf, wobei die Ultraschallsensorvorrichtung eine Schalteinrichtung zum Verbinden des zumindest einen ersten Ultraschallsensors und des zumindest einen zweiten Ultraschallsensors mit dem Steuergerät oder des zumindest einen Umfeld-Ultraschallsensors mit dem Steuergerät aufweist. Insbesondere ist es vorgesehen, dass die Ultraschallsensorvorrichtung eine Mehrzahl von Umwelt-Ultraschallsensoren aufweist. Diese Umfeld-Ultraschallsensoren können an den Stoßfängern des Kraftfahrzeugs angeordnet sein. Mithilfe des Steuergeräts können die Sensorsignale, die von dem ersten und dem zweiten Ultraschallsensor, welche zur Überwachung des Bodenbereichs verwendet werden, ausgewertet werden. In gleicher Weise können mit dem Steuergerät die Sensorsignale, die von den Umfeld-Ultraschallsensoren bereitgestellt werden, ausgewertet werden. Üblicherweise verwendete Steuergeräte haben eine vorbestimmte Anzahl von Kanälen für die Verarbeitung von Sensorsignalen. Damit können die Sensorsignale der Ultraschallsensoren und der Umwelt-Ultraschallsensoren nicht auf einmal ausgewertet werden. Dies gilt insbesondere für den Fall, dass die Ultraschallsensorvorrichtung bis zu zwölf Umfeld-Ultraschallsensoren aufweist. Mithilfe der Schalteinrichtung können zu einem ersten Zeitpunkt die Ultraschallsensoren zur Überwachung des Bodenbereichs mit dem Steuergerät verbunden werden. Zu einem zweiten Zeitpunkt können dann die Umfeld-Ultraschallsensoren dem Steuergerät verbunden werden. Damit ist es nicht notwendig, zwei separate Steuergeräte zu verwenden. Somit können Kosten und Bauraum eingespart werden.

Es kann vorgesehen sein, dass die Schalteinrichtung in Abhängigkeit von dem aktuellen Betriebszustand des Kraftfahrzeugs angesteuert wird. Wenn das Kraftfahrzeug stillsteht, können die Ultraschallsensoren zur Überwachung des Bodenbereichs beziehungsweise der erste Ultraschallsensor und der zweite Ultraschallsensor mit dem Steuergerät verbunden werden. Bei dem Anfahren des Kraftfahrzeugs beziehungsweise bei der Fahrt des Kraftfahrzeugs können dann die Umfeld-Ultraschallsensoren zur Überwachung des Umgebungsbereichs aktiviert werden. Es kann auch vorgesehen sein, dass mittels des Steuergeräts auf Grundlage der jeweils empfangenen Sensorsignale eine digitale Umgebungskarte erzeugt wird. Diese digitale Umgebungskarte kann sowohl den Bodenbereich als auch den Umgebungsbereich beschreiben. Dabei kann es vorgesehen sein, dass zunächst der Bodenbereich analysiert wird und die digitale Umgebungskarte mit den Objekten in dem Bodenbereich gefüllt wird. Dann kann über die Schalteinrichtung auf die äußeren Ultraschallsensoren beziehungsweise Umwelt-Ultraschallsensoren umgeschaltet werden und die Umgebung des Kraftfahrzeugs entsprechend analysiert werden. Auch hier können die Objekte in dem Umgebungsbereich erfasst werden und in die digitale Umgebungskarte eingetragen werden.

Ein erfindungsgemäßes Fahrerassistenzsystem für ein Kraftfahrzeug umfasst eine erfindungsgemäße Ultraschallsensorvorrichtung. Dabei ist das Fahrerassistenzsystem bevorzugt dazu ausgelegt, eine Warnung in Abhängigkeit von dem in dem Bodenbereich erfassten Objekt auszugeben. Falls mithilfe der Ultraschallsensorvorrichtung ein Objekt in dem Bodenbereich erkannt wird, kann mithilfe des Fahrerassistenzsystems ein Warnsignal an den Fahrer des Kraftfahrzeugs ausgegeben werden. Es kann auch vorgesehen sein, dass das Fahrerassistenzsystem ein Anfahren des Kraftfahrzeugs unterbindet, sodass eine Beschädigung des Kraftfahrzeugs und/oder des Objekts verhindert werden kann. Insbesondere kann ein autonomes Fahrmanöver unterbunden werden, falls sich das Objekt in dem Bodenbereich befindet.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Es kann auch vorgesehen sein, dass das Kraftfahrzeug als Nutzfahrzeug ausgebildet ist.

Dabei kann es vorgesehen sein, dass der zumindest eine erste Ultraschallsensor und/oder der zumindest eine zweite Ultraschallsensor an einem Bereich des Unterbodens des Kraftfahrzeugs angeordnet sind. Insbesondere sind die Ultraschallsensoren an dem Unterboden des Kraftfahrzeugs angeordnet. Die Ultraschallsensoren können so ausgebildet sein, dass diese das Ultraschallsignal schräg in Richtung der Fahrbahnoberfläche aussenden können und/oder dass diese von der Fahrbahnoberfläche reflektierte Ultraschallsignale empfangen können. Dabei können die Ultraschallsensoren an den Eckbereichen des Kraftfahrzeugs angeordnet sein. Somit wird es insbesondere ermöglicht, dass das Ultraschallsignal von dem ersten Ultraschallsensor zu dem zweiten Ultraschallsensor diagonal entlang des Bodenbereichs übertragen werden kann. Es kann auch vorgesehen sein, dass die Ultraschallsensoren an den Seitenbereichen, dem Frontbereich und/oder dem Heckbereich angeordnet sind. Dabei sind die Ultraschallsensoren insbesondere mittig an dem Seitenbereich, den Heckbereich und oder den Frontbereich angeordnet. Es kann auch vorgesehen sein, dass die Ultraschallsensoren in einem jeweiligen Bereich vor und/oder hinter den Rädern angeordnet sind. In diesen Bereich besteht das größte Verletzungsrisiko für Tiere, die sich in dem Bodenbereich befinden. Somit kann auf zuverlässige Weise verhindert werden, dass das Objekt durch ein Überrollen mit einem der Räder beschädigt wird.

In einer weiteren Ausführungsform sind der zumindest eine erste Ultraschallsensor und/oder der zumindest eine zweite Ultraschallsensor an einem Lenkungselement der lenkbaren Räder des Kraftfahrzeugs angeordnet. Bei dem Lenkungselement kann es sich beispielsweise um einen Radträger handeln. Das Lenkungselement ist mit den lenkbaren Rädern des Kraftfahrzeugs verbunden. Insbesondere sind die Ultraschallsensoren so an dem Lenkungselement angeordnet, dass diese zusammen mit dem Lenkungselement bei dem Eingriff in die Lenkung bewegt werden können. Wenn nun die Lenkung im Stand des Kraftfahrzeugs betätigt wird, wird das Lenkungselement bewegt. Dies bewirkt, dass sich die Ultraschallsensoren, die an dem Lenkungselement angeordnet sind, ebenfalls bewegen. Auf diese Weise kann erreicht werden, dass die Ultraschallsensoren verschwenkt werden können. Somit kann der Erfassungsbereich der Ultraschallsensoren auf einfache Weise erweitert werden.

Die mit Bezug auf das erfindungsgemäße Verfahren vorgestellten bevorzugten Ausführungsformen und deren Vorteile gelten entsprechend für die erfindungsgemäße Ultraschallsensorvorrichtung, für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die Erfindung wird nun anhand von bevorzugten Ausführungsbeispielen sowie unter Bezugnahme auf die beigefügten Zeichnungen näher erläutert.
Dabei zeigen:
- Fig. 1: ein Kraftfahrzeug gemäß einer Ausführungsform der Erfindung, welches eine Ultraschallsensorvorrichtung zur Überwachung eines Bodenbereich unterhalb des Kraftfahrzeugs aufweist, wobei die Ultraschallsensorvorrichtung zwei Ultraschallsensoren aufweist;
- Fig. 2: ein Kraftfahrzeug mit einer Ultraschallsensorvorrichtung gemäß einer Ausführungsform, wobei die Ultraschallsensorvorrichtung vier Ultraschallsensoren aufweist;
- Fig. 3: ein Kraftfahrzeug mit einer Ultraschallsensor Vorrichtung gemäß einer weiteren Ausführungsform, wobei die Ultraschallsensorvorrichtung zehn Ultraschallsensoren aufweist;
- Fig. 4: das Kraftfahrzeug gemäß Fig. 3 in einer Seitenansicht;
- Fig. 5: ein Kraftfahrzeug mit einer Ultraschallsensorvorrichtung gemäß einer weiteren Ausführungsform, wobei die Ultraschallsensorvorrichtung zudem eine Mehrzahl von Umfeld-Ultraschallsensoren aufweist; und
- Fig. 6: eine schematische Darstellung einer Ultraschallsensorvorrichtung, welche einen Ultraschallsensor zur Überwachung des Bodenbereichs und einen Umfeld-Ultraschallsensor umfasst.

In den Figuren werden gleiche und funktionsgleiche Elemente mit den gleichen Bezugszeichen versehen.

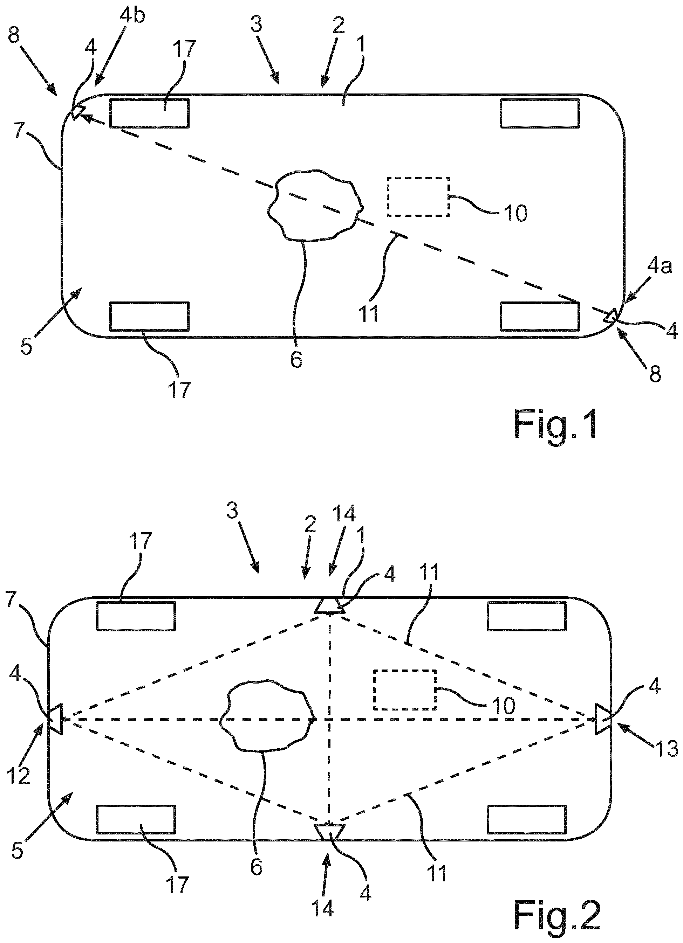

Fig. 1 zeigt ein Kraftfahrzeug 1 gemäß einer Ausführungsform der Erfindung von einer Unterseite. Das Kraftfahrzeug 1 ist vorliegend als Personenkraftwagen ausgebildet. Das Kraftfahrzeug 1 umfasst ein Fahrerassistenzsystem 2 sowie eine Ultraschallsensorvorrichtung 3. Mithilfe der Ultraschallsensorvorrichtung 3 kann einen Bodenbereich 5 unterhalb des Kraftfahrzeugs 1 überwacht werden. Insbesondere kann mittels der Ultraschallsensorvorrichtung 3 überprüft werden, ob sich ein Objekt 6 in dem Bodenbereich 5 befindet.

Die Ultraschallsensorvorrichtung 3 umfasst zumindest zwei Ultraschallsensoren 4. In dem vorliegenden Ausführungsbeispiel umfasst die Ultraschallsensorvorrichtung 3 zwei Ultraschallsensoren 4. Mit den Ultraschallsensoren 4 kann jeweils ein Ultraschallsignal ausgesendet werden und ein Ultraschallsignal empfangen werden. Vorliegend sind die Ultraschallsensoren 4 an einem Unterboden 7 des Kraftfahrzeugs 1 angeordnet. In diesem Ausführungsbeispiel sind die Ultraschallsensoren 4 an gegenüberliegenden Eckbereichen 8 angeordnet. Dabei wird einer der Ultraschallsensoren 4 als erster Ultraschallsensor 4a beziehungsweise als Sender betrieben. Mit dem ersten Ultraschallsensor 4a wird das Ultraschallsignal ausgesendet. Dieses ausgesendete Ultraschallsignal kann dann an einer Fahrbahnoberfläche 9 des Bodenbereichs 5 und/oder an dem Unterboden 7 reflektiert werden. Der andere Ultraschallsensor 4 wird als zweiter Ultraschallsensor 4b beziehungsweise als Empfänger betrieben. Mit dem zweiten Ultraschallsensor 4b kann das Ultraschallsignal empfangen werden.

Die Ultraschallsensorvorrichtung 3 umfasst ferner ein Steuergerät 10. Mittels des Steuergeräts 10 kann von dem zweiten Ultraschallsensor 4b ein Sensorsignal empfangen werden, welches das empfangene Ultraschallsignal beschreibt. Vorliegend befindet sich das Objekt 6 auf einer Übertragungslinie 11 zwischen dem ersten Ultraschallsensor 4a und dem zweiten Ultraschallsensor 4b. Entlang dieser Übertragungslinie 11 wird das Ultraschallsignal von dem ersten Ultraschallsensor 4a zu dem zweiten Ultraschallsensor 4b übertragen. Damit wird das Ultraschallsignal, welches von dem ersten Ultraschallsensor 4a ausgesendet wurde, an dem Objekt 6 reflektiert. Somit wird von dem zweiten Ultraschallsensor 4b kein Ultraschallsignal empfangen. Durch die Auswertung des Sensorsignals mittels der Steuergeräts 10 kann dann erkannt werden, dass sich das Objekt 6 in dem Bodenbereich 5 befindet.

Fig. 2 zeigt ein Kraftfahrzeug 1 mit einer Ultraschallsensorvorrichtung 3 gemäß einer weiteren Ausführungsform. Hier weist die Ultraschallsensorvorrichtung 3 vier Ultraschallsensoren 4 auf. Dabei ist einer der Ultraschallsensoren 4 mittig an einem Frontbereich 12 des Kraftfahrzeugs 1 angeordnet, ein weiterer der Ultraschallsensoren 4 ist mittig an einem Heckbereich 13 des Kraftfahrzeugs 1 angeordnet und die übrigen zwei Ultraschallsensoren 4 sind mittig an den jeweiligen Seitenbereichen 14 des Kraftfahrzeugs 1 angeordnet. Dabei können die 4 Ultraschallsensoren grundsätzlich beliebig als erste Ultraschallsensoren 4a beziehungsweise als Sender oder als zweite Ultraschallsensoren 4b beziehungsweise als Empfänger betrieben werden. Zwischen diesen vier Ultraschallsensoren 4 ergeben sich unterschiedliche Übertragungslinien 11, über welche die Ultraschallsignale ausgetauscht werden können. Anhand des jeweils von einem der zweiten Ultraschallsensoren 4b empfangenen Ultraschallsignals kann dann erkannt werden, dass sich das Objekt 6 in dem Bodenbereich 5 befindet. Ferner kann anhand der bekannten Übertragungslinien 11 bestimmt werden, wo sich dieses Objekt 6 in dem Bodenbereich 5 befindet.

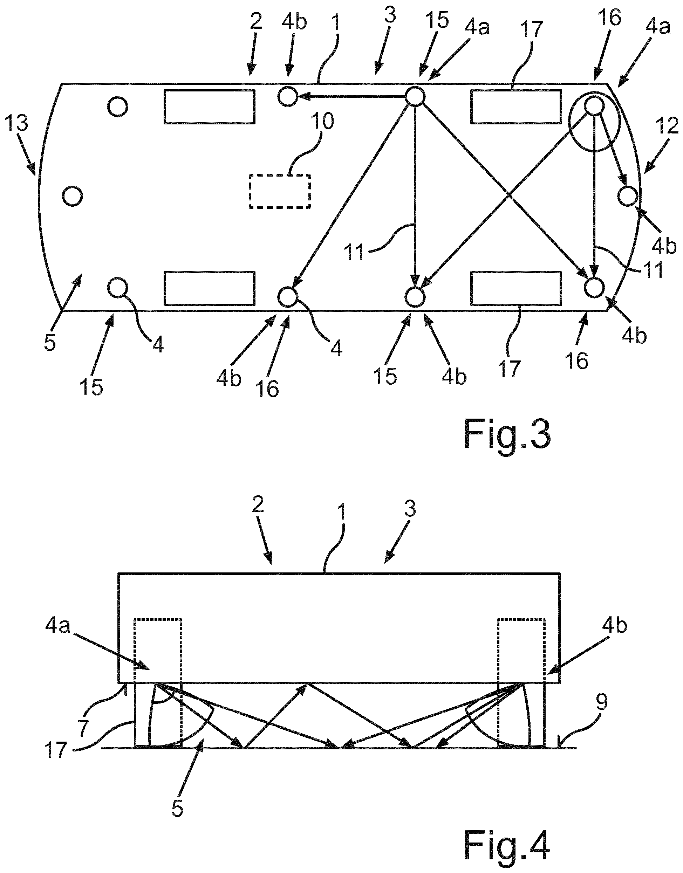

Fig. 3 zeigt ein Kraftfahrzeug 1 mit einer Ultraschallsensorvorrichtung 3 gemäß einer weiteren Ausführungsform. Hier weist die Ultraschallsensorvorrichtung 3 zehn Ultraschallsensoren 4 auf. Dabei ist einer der Ultraschallsensoren 4 mittig an dem Frontbereich 12 des Kraftfahrzeugs 1 angeordnet und einer der Ultraschallsensoren 4 ist mittig an dem Heckbereich 13 des Kraftfahrzeugs 1 angeordnet. Die übrigen Ultraschallsensoren 4 sind in Bereichen 15 vor den Rädern 17 des Kraftfahrzeugs 1 und in Bereichen 16 hinter den Rädern 17 des Kraftfahrzeugs 1 angeordnet. Bei dem vorliegenden Beispiel werden zwei der Ultraschallsensoren 4 als erste Ultraschallsensoren 4a betrieben. Auch hier sind beispielhaft einige der Übertragungslinien 11 zwischen den ersten Ultraschallsensoren 4a und den zweiten Ultraschallsensoren 4b gezeigt.

Hierzu zeigt Fig. 4 beispielhaft die Ausbreitung der Ultraschallsignale, die mit den ersten Ultraschallsensoren 4a ausgesendet werden und von den zweiten Ultraschallsensoren 4b empfangen werden. Dabei ist zu erkennen, dass die Ultraschallsignale einerseits an der Fahrbahnoberfläche 9 und andererseits an dem Unterboden 7 reflektiert werden. Somit kann der komplette Bodenbereich 5 auf das Vorhandensein des Objekts 6 überwacht werden.

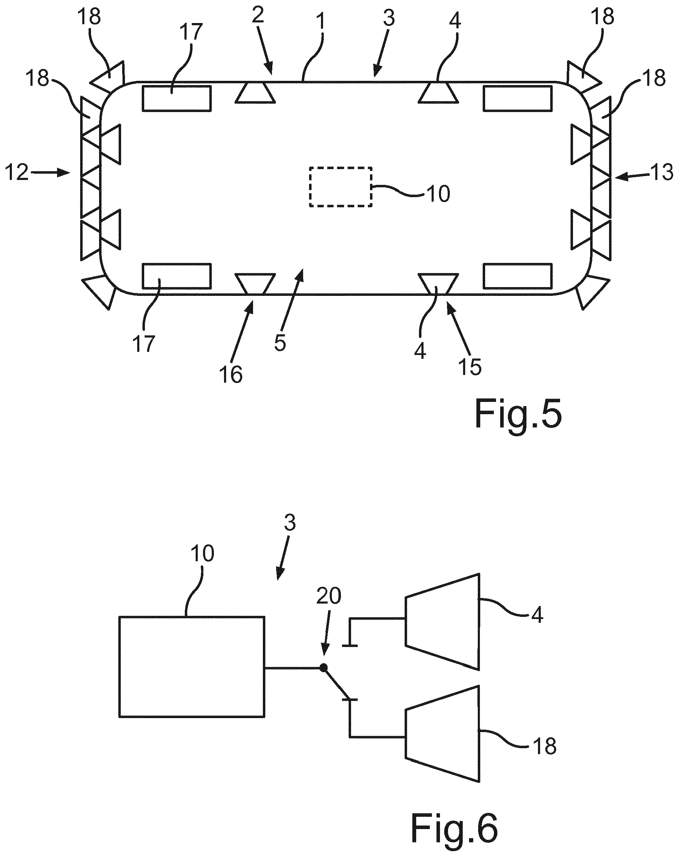

Fig. 5 zeigt ein Kraftfahrzeug 1 mit einer Ultraschallsensorvorrichtung 3 gemäß einer weiteren Ausführungsform. Hier umfasst die Ultraschallsensorvorrichtung 3 acht Ultraschallsensoren 4. Dabei sind zwei der Ultraschallsensoren 4 an dem Frontbereich 12 des Kraftfahrzeugs 1 angeordnet und zwei der Ultraschallsensoren 4 sind an dem Heckbereich 13 des Kraftfahrzeugs 1 angeordnet. Ferner sind 2 der Ultraschallsensoren 4 an den Bereichen 15 vor den Rädern 17 angeordnet und zwei Ultraschallsensoren 4 sind in den Bereichen 16 hinter den Rädern 17 angeordnet.

Darüber hinaus umfasst die Ultraschallsensorvorrichtung 3 eine Mehrzahl von Umfeld-Ultraschallsensoren 18. Mit den Umfeld-Ultraschallsensoren 18 kann ein Umgebungsbereich 19 um das Kraftfahrzeug 1 herum erfasst werden. Vorliegend sind sechs Umfeld-Ultraschallsensoren 18 an dem Frontbereich 12 und sechs Umfeld-Ultraschallsensoren an dem Heckbereich 13 angeordnet. Die Umfeld-Ultraschallsensoren 18 können an den Stoßfänger des Kraftfahrzeugs 1 angeordnet sein.

Fig. 6 zeigt eine schematische Darstellung einer Ultraschallsensorvorrichtung 3 gemäß einer weiteren Ausführungsform. Vorliegend ist beispielhaft einer der Ultraschallsensoren 4 und einer der Umfeld-Ultraschallsensoren 18 sowie das Steuergerät 10 dargestellt. Die Ultraschallsensorvorrichtung 3 umfasst ferner eine Schalteinrichtung 20, welche beispielhaft dargestellt ist. Mittels der Schalteinrichtung 20 können entweder die Ultraschallsensoren 4 mit dem Steuergerät 10 zur Datenübertragung verbunden werden oder es können die Umfeld-Ultraschallsensoren 18 mit dem Steuergerät 10 zur Datenübertragung verbunden werden. Zu einem ersten Zeitpunkt kann beispielsweise der Bodenbereich 5 überwacht werden. Hierzu können die Ultraschallsensoren 4 mit dem Steuergerät 10 verbunden werden. Dies erfolgt insbesondere dann, wenn das Kraftfahrzeug 1 stillsteht. Hierbei kann dann beispielsweise eine digitale Umgebungskarte bestimmt werden, welche die Objekte 6 in dem Bodenbereich 5 beschreibt. Zu einem späteren Zeitpunkt können dann die Umfeld-Ultraschallsensoren 18 mit dem Steuergerät 10 verbunden werden. Dies erfolgt insbesondere dann, wenn sich das Kraftfahrzeug 1 bewegt. Somit kann der Umgebungsbereich 19 des Kraftfahrzeugs 1 erfasst werden und die digitale Umgebungskarte für den Umgebungsbereich 19 aktualisiert werden.

Vor einem Fahrtantritt kann überprüft werden, ob sich ein Objekt in dem Bodenbereich 5 befindet. Falls mittels der Ultraschallsensorvorrichtung 3 ein Objekt 6 in dem Bodenbereich 5 erkannt wird, kann mittels des Fahrerassistenzsystems 2 eine Warnung an den Fahrer des Kraftfahrzeugs 1 ausgegeben werden. Es kann auch vorgesehen sein, dass ein Anfahren des Kraftfahrzeugs 1 unterbunden wird und/oder dass eine autonome Fahrt mit dem Kraftfahrzeug 1 nicht gestartet wird, solange das Objekt 6 in dem Bodenbereich 5 vorhanden ist.

## Patentansprüche

1. Verfahren zum Betreiben einer Ultraschallsensorvorrichtung (3) für ein Kraftfahrzeug (1), bei welchem ein Ultraschallsignal in einen Bodenbereich (5), der sich von einer Fahrbahnoberfläche, auf welcher sich das Kraftfahrzeug aktuell befindet, bis zu einem Unterboden des Kraftfahrzeugs erstreckt, unterhalb des Kraftfahrzeugs (1) ausgesendet wird und ein Ultraschallsignal aus dem Bodenbereich (5) empfangen wird und mittels eines Steuergeräts (10) anhand des ausgesendeten und/oder des empfangenen Ultraschallsignals ein Objekt (6) in dem Bodenbereich (5) erkannt wird,
**dadurch gekennzeichnet, dass**
das Ultraschallsignal mit einem ersten Ultraschallsensor (4a) der Ultraschallsensorvorrichtung (3) ausgesendet wird und das von dem ersten Ultraschallsensor (4a) ausgesendete und an einer Fahrbahnoberfläche (9) in dem Bodenbereich (5) reflektierte Ultraschallsignal mit einem zweiten Ultraschallsensor (4b) der Ultraschallsensorvorrichtung (3) empfangen wird und mittels des Steuergeräts (10) anhand eines Anteils des von dem zweiten Ultraschallsensor (4b) empfangenen Ultraschallsignals das Objekt (6) erkannt wird.

2. Verfahren nach Anspruch 1,
**dadurch gekennzeichnet, dass**
das Objekt (6) anhand des Anteils des von dem zweiten Ultraschallsensor (4b) empfangenen Ultraschallsignals während eines Stillstands des Kraftfahrzeugs (1) erkannt wird.

3. Verfahren nach Anspruch 1 oder 2,
**dadurch gekennzeichnet, dass**
der Anteil des von dem zweiten Ultraschallsensor (4b) empfangenen Ultraschallsignals nach einem Abstellen des Kraftfahrzeugs (1) gespeichert wird und der Anteil des von dem zweiten Ultraschallsensor (4b) empfangene Ultraschallsignal zu einem späteren Zeitpunkt nochmals bestimmt wird und mit dem gespeicherten Anteil verglichen wird.

4. Verfahren nach Anspruch 3,
**dadurch gekennzeichnet, dass**
der Anteil des empfangenen Ultraschallsignals nach dem Abstellen des Kraftfahrzeugs (1) periodisch bestimmt wird und mit dem gespeicherten Anteil verglichen wird.

5. Verfahren nach einem der vorhergehenden Ansprüche,
**dadurch gekennzeichnet, dass**
eine Intensität des von dem zweiten Ultraschallsensor (4b) empfangenen Ultraschallsignals nach einem Abstellen des Kraftfahrzeugs (1) bestimmt wird und zum Erkennen des Objekts (6) mit einer vorbestimmten Referenzintensität verglichen wird.

6. Verfahren nach einem der vorhergehenden Ansprüche,
**dadurch gekennzeichnet, dass**
der erste Ultraschallsensor (4a) und/oder der zweite Ultraschallsensor (4b) zu vorbestimmten Zeitpunkten zum Reinigen einer jeweiligen Membran der Ultraschallsensoren (4a, 4b) angesteuert werden.

7. Ultraschallsensorvorrichtung (3) für ein Kraftfahrzeug (1), mit zumindest einem ersten Ultraschallsensor (4a), zumindest einem zweiten Ultraschallsensor (4b) und mit einem Steuergerät (10), wobei die Ultraschallsensorvorrichtung (3) zum Durchführen eines Verfahrens nach einem der vorhergehenden Ansprüche ausgelegt ist.

8. Ultraschallsensorvorrichtung (3) nach Anspruch 7,
**dadurch gekennzeichnet, dass**
die Ultraschallsensorvorrichtung (3) zumindest vier Ultraschallsensoren (4, 4a, 4b), insbesondere zumindest zehn Ultraschallsensoren (4, 4a, 4b), aufweist.

9. Ultraschallsensorvorrichtung (3) nach Anspruch 7 oder 8,
**dadurch gekennzeichnet, dass**
die Ultraschallsensorvorrichtung (3) zumindest einen Umfeld-Ultraschallsensor (18) zum Erfassen eines Umgebungsbereichs (19) des Kraftfahrzeugs (1) aufweist, wobei die Ultraschallsensorvorrichtung (3) eine Schalteinrichtung (20) zum Verbinden des zumindest einen ersten Ultraschallsensors (4a) und des zumindest einen zweiten Ultraschallsensors (4b) mit dem Steuergerät (10) oder des zumindest einen Umfeld-Ultraschallsensors (18) mit dem Steuergerät (10) aufweist.

10. Fahrerassistenzsystem (2) für ein Kraftfahrzeug (1) mit einer Ultraschallsensorvorrichtung (3) nach einem der Ansprüche 7 bis 9, wobei das Fahrerassistenzsystem (2) dazu ausgelegt ist, eine Warnung in Abhängigkeit von dem in dem Bodenbereich (5) erfassten Objekt (6) auszugeben.

11. Kraftfahrzeug (1) mit einem Fahrerassistenzsystem nach Anspruch 10.

12. Kraftfahrzeug (1) nach Anspruch 11,
**dadurch gekennzeichnet, dass**
der zumindest eine erste Ultraschallsensor (4a) und/oder der zumindest eine zweite Ultraschallsensor (4b) an einem Unterboden (7) des Kraftfahrzeugs (1) an Eckbereichen (8) angeordnet sind.

13. Kraftfahrzeug (1) nach Anspruch 11 oder 12,
**dadurch gekennzeichnet, dass**
der zumindest eine erste Ultraschallsensor (4a) und/oder der zumindest eine zweite Ultraschallsensor (4b) an dem Unterboden (7) des Kraftfahrzeugs (1) mittig an einem Seitenbereich (14), einem Frontbereich (12) und/oder einem Heckbereich (13) angeordnet sind.

14. Kraftfahrzeug (1) nach einem der Ansprüche 11 bis 13,
**dadurch gekennzeichnet, dass**
der zumindest eine erste Ultraschallsensor (4a) und/oder der zumindest eine zweite Ultraschallsensor (4b) an dem Unterboden (7) des Kraftfahrzeugs (1) in einem Bereich (15) vor und/oder einem Bereich (16) hinter einem der Räder (17) des Kraftfahrzeugs (1) angeordnet sind.

15. Kraftfahrzeug (1) nach einem der Ansprüche 11 bis 14,
**dadurch gekennzeichnet, dass**
der zumindest eine erste Ultraschallsensor (4a) und/oder der zumindest eine zweite Ultraschallsensor (4b) an einem Lenkungselement der lenkbaren Räder (17) des Kraftfahrzeugs (1) angeordnet sind.

## Claims

1. Method for operating an ultrasonic sensor device (3) for a motor vehicle (1), in which an ultrasonic signal is emitted to a ground area (5) below the motor vehicle (1), said ground area extending from a road surface on which the motor vehicle is currently situated to an underbody of the motor vehicle, and an ultrasonic signal is received from the ground area (5) and an object (6) in the ground area (5) is detected by means of a control unit (10) on the basis of the emitted and/or the received ultrasonic signal,
**characterized in that**
the ultrasonic signal is emitted by a first ultrasonic sensor (4a) of the ultrasonic sensor device (3) and the ultrasonic signal emitted by the first ultrasonic sensor (4a) and reflected at a road surface (9) in the ground area (5) is received by a second ultrasonic sensor (4b) of the ultrasonic sensor device (3) and the object (6) is detected by means of the control unit (10) on the basis of a proportion of the ultrasonic signal that is received by the second ultrasonic sensor (4b).

2. Method according to Claim 1,
**characterized in that**
the object (6) is detected on the basis of the proportion of the ultrasonic signal that is received by the second ultrasonic sensor (4b) while the motor vehicle (1) is at a standstill.

3. Method according to Claim 1 or 2,
**characterized in that**
the proportion of the ultrasonic signal that is received by the second ultrasonic sensor (4b) is stored after the motor vehicle (1) is stopped and the proportion of the ultrasonic signal that is received by the second ultrasonic sensor (4b) is determined again at a later time and is compared with the stored proportion.

4. Method according to Claim 3,
**characterized in that**
the proportion of the ultrasonic signal received after stopping the motor vehicle (1) is determined periodically and is compared with the stored proportion.

5. Method according to any one of the preceding claims,
**characterized in that**
an intensity of the ultrasonic signal that is received by the second ultrasonic sensor (4b) is determined after stopping the motor vehicle (1) and compared with a predetermined reference intensity in order to detect the object (6).

6. Method according to any one of the preceding claims,
**characterized in that**
the first ultrasonic sensor (4a) and/or the second ultrasonic sensor (4b) is/are controlled at predetermined times for cleaning a respective membrane of the ultrasonic sensors (4a, 4b).

7. Ultrasonic sensor device (3) for a motor vehicle (1), with at least one first ultrasonic sensor (4a), at least one second ultrasonic sensor (4b) and with one control unit (10), wherein the ultrasonic sensor device (3) is designed to perform a method according to any one of the preceding claims.

8. Ultrasonic sensor device (3) according to Claim 7,
**characterized in that**
the ultrasonic sensor device (3) comprises at least four ultrasonic sensors (4, 4a, 4b), in particular at least ten ultrasonic sensors (4, 4a, 4b).

9. Ultrasonic sensor device (3) according to Claim 7 or 8,
**characterized in that**
the ultrasonic sensor device (3) comprises at least one environment ultrasonic sensor (18) for detecting a surrounding area (19) of the motor vehicle (1), wherein the ultrasonic sensor device (3) comprises a switching device (20) for connecting the at least one first ultrasonic sensor (4a) and the at least one second ultrasonic sensor (4b) to the control unit (10) or the at least one environment ultrasonic sensor (18) to the control unit (10).

10. Driver assistance system (2) for a motor vehicle (1) with an ultrasonic sensor device (3) according to any one of Claims 7 to 9, wherein the driver assistance system (2) is designed to issue a warning depending on the object (6) detected in the ground area (5).

11. Motor vehicle (1) with a driver assistance system according to Claim 10.

12. Motor vehicle (1) according to Claim 11,
**characterized in that**
the at least one first ultrasonic sensor (4a) and/or the at least one second ultrasonic sensor (4b) is/are arranged in corner areas (8) on an underbody (7) of the motor vehicle (1).

13. Motor vehicle (1) according to Claim 11 or 12,
**characterized in that**
the at least one first ultrasonic sensor (4a) and/or the at least one second ultrasonic sensor (4b) is/are arranged on the underbody (7) of the motor vehicle (1) in the centre of a side area (14), a front area (12) and/or a rear area (13).

14. Motor vehicle (1) according to any one of Claims 11 to 13,
**characterized in that**
the at least one first ultrasonic sensor (4a) and/or the at least one second ultrasonic sensor (4b) is/are arranged on the underbody (7) of the motor vehicle (1) in an area (15) in front of and/or an area (16) behind one of the wheels (17) of the motor vehicle (1) .

15. Motor vehicle (1) according to any one of Claims 11 to 14,
**characterized in that**
the at least one first ultrasonic sensor (4a) and/or the at least one second ultrasonic sensor (4b) is/are arranged on a steering element of the steerable wheels (17) of the motor vehicle (1).

## Revendications

1. Procédé pour faire fonctionner un arrangement de détection à ultrasons (3) pour un véhicule automobile (1), avec lequel un signal ultrasonore est émis au-dessous du véhicule automobile (1) dans une zone de sol (5), qui s'étend de la surface de voie de circulation sur laquelle se trouve actuellement le véhicule automobile jusqu'à un dessous de caisse du véhicule automobile, et un signal ultrasonore provenant de la zone de sol (5) est reçu et un objet (6) dans la zone de sol (5) est reconnu au moyen d'un contrôleur (10) à l'aide du signal ultrasonore émis et/ou reçu,
**caractérisé en ce que**
le signal ultrasonore est émis avec un premier détecteur à ultrasons (4a) de l'arrangement de détection à ultrasons (3) et le signal sonore émis par le premier détecteur à ultrasons (4a) et réfléchi au niveau d'une surface de voie de circulation (9) dans la zone de sol (5) est reçu avec un deuxième détecteur à ultrasons (4b) de l'arrangement de détection à ultrasons (3) et l'objet (6) est reconnu au moyen du contrôleur (10) à l'aide d'une part du signal ultrasonore reçu par le deuxième détecteur à ultrasons (4b).

2. Procédé selon la revendication 1, **caractérisé en ce que** l'objet (6) est reconnu à l'aide de la part du signal ultrasonore reçu par le deuxième détecteur à ultrasons (4b) pendant une immobilisation du véhicule automobile (1) .

3. Procédé selon la revendication 1 ou 2, **caractérisé en ce que** la part du signal ultrasonore reçu par le deuxième détecteur à ultrasons (4b) est mémorisée après la mise à l'arrêt du véhicule automobile (1) et la part du signal ultrasonore reçu par le deuxième détecteur à ultrasons (4b) est une nouvelle fois déterminée à un moment ultérieur puis comparée à la part mémorisée.

4. Procédé selon la revendication 3, **caractérisé en ce que** la part du signal ultrasonore reçu est déterminée périodiquement après la mise à l'arrêt du véhicule automobile (1) et comparée à la part mémorisée.

5. Procédé selon l'une des revendications précédentes, **caractérisé en ce que** l'intensité du signal ultrasonore reçu par le deuxième détecteur à ultrasons (4b) est déterminée après une mise à l'arrêt du véhicule automobile (1) et comparée avec une intensité de référence prédéterminée en vue de reconnaître l'objet (6) .

6. Procédé selon l'une des revendications précédentes, **caractérisé en ce que** le premier détecteur à ultrasons (4a) et/ou le deuxième détecteur à ultrasons (4b) sont excités à des instants prédéterminés en vue de nettoyer une membrane respective des détecteurs à ultrasons (4a, 4b) .

7. Arrangement de détection à ultrasons (3) pour un véhicule automobile (1), comprenant au moins un premier détecteur à ultrasons (4a), au moins un deuxième détecteur à ultrasons (4b) et comprenant un contrôleur (10), l'arrangement de détection à ultrasons (3) étant conçu pour mettre en œuvre un procédé selon l'une des revendications précédentes.

8. Arrangement de détection à ultrasons (3) selon la revendication 7, **caractérisé en ce que** l'arrangement de détection à ultrasons (3) possède au moins quatre détecteurs à ultrasons (4, 4a, 4b), notamment au moins dix détecteurs à ultrasons (4, 4a, 4b).

9. Arrangement de détection à ultrasons (3) selon la revendication 7 ou 8, **caractérisé en ce que** l'arrangement de détection à ultrasons (3) possède au moins un capteur à ultrasons d'environnement (18) destiné à détecter une zone environnante (19) du véhicule automobile (1), l'arrangement de détection à ultrasons (3) possédant un dispositif de commutation (20) destiné à relier l'au moins un premier détecteur à ultrasons (4a) et l'au moins un deuxième détecteur à ultrasons (4b) au contrôleur (10) ou l'au moins un capteur à ultrasons d'environnement (18) au contrôleur (10).

10. Système d'assistance à la conduite (2) pour un véhicule automobile (1) comprenant un arrangement de détection à ultrasons (3) selon l'une des revendications 7 à 9, le système d'assistance à la conduite (2) étant conçu pour délivrer un avertissement en fonction de l'objet (6) détecté dans la zone de sol (5)

11. Véhicule automobile (1) équipé d'un système d'assistance à la conduite selon la revendication 10.

12. Véhicule automobile (1) selon la revendication 11, **caractérisé en ce que** l'au moins un premier détecteur à ultrasons (4a) et/ou l'au moins un deuxième détecteur à ultrasons (4b) sont disposés au niveau d'un dessous de caisse (7) du véhicule automobile (1) dans des zones de coin (8).

13. Véhicule automobile (1) selon la revendication 11 ou 12, **caractérisé en ce que** l'au moins un premier détecteur à ultrasons (4a) et/ou l'au moins un deuxième détecteur à ultrasons (4b) sont disposés au niveau du dessous de caisse (7) du véhicule automobile (1) au centre au niveau d'une zone latérale (14), d'une zone frontale (12) et/ou d'une zone arrière (13).

14. Véhicule automobile (1) selon l'une des revendications 11 à 13, **caractérisé en ce que** l'au moins un premier détecteur à ultrasons (4a) et/ou l'au moins un deuxième détecteur à ultrasons (4b) sont disposés au niveau du dessous de caisse (7) du véhicule automobile (1) dans une zone (15) devant et/ou dans une zone (16) derrière l'une des roues (17) du véhicule automobile (1).

15. Véhicule automobile (1) selon l'une des revendications 11 à 14, **caractérisé en ce que** l'au moins un premier détecteur à ultrasons (4a) et/ou l'au moins un deuxième détecteur à ultrasons (4b) sont disposés au niveau d'un élément de direction des roues orientables (17) du véhicule automobile (1).
